# EUROPÄISCHE PATENTSCHRIFT

(11) **EP 3 248 453 B1**
(45) Veröffentlichungstag und Bekanntmachung des Hinweises auf die Patenterteilung: **01.07.2020**
(21) Anmeldenummer: 17171854.7
(22) Anmeldetag: 19.05.2017
(51) Int. Cl.: A01G 9/14, A01G 22/00

(54) **EINDECKUNGSTEIL FÜR EIN GEWÄCHSHAUS, GEWÄCHSHAUS UND VERWENDUNG EINER SCHICHT FÜR EIN EINDECKUNGSTEIL**
COVERING PART FOR A GREENHOUSE, GREENHOUSE AND USE OF A COATING FOR A COVERING PART
ÉLÉMENT DE COUVERTURE POUR UNE SERRE, SERRE ET UTILISATION D'UNE COUCHE POUR UN ÉLÉMENT DE COUVERTURE

(30) Priorität: 24.05.2016 DE 102016109519
(43) Veröffentlichungstag der Anmeldung: 29.11.2017
(73) Patentinhaber: OSRAM GmbH, 80807 München (DE)
(72) Erfinder: ANGENENDT, Guido, 81671 München (DE); BONGARTZ, Timo, 80469 München (DE); HAAS, Norbert, 89129 Langenau (DE)
(74) Vertreter: Winter, Brandl, Fürniss, Hübner, Röss, Kaiser, Polte - Partnerschaft mbB

(56) Entgegenhaltungen:
- US-A1- 2011 016 779
- US-A1- 2016 025 288

## Beschreibung

Die Erfindung geht aus von einem Eindeckungsteil für ein Gewächshaus, insbesondere ein Innenraum-Gewächshaus oder Instore-Gewächshaus oder Laden-Gewächshaus, wobei das Eindeckungsteil als Glas- oder Kunststoffscheibe oder Folie ausgebildet und lichtdurchlässig ist. Des Weiteren betrifft die Erfindung ein Gewächshaus mit zumindest einem derartigen Eindeckungsteil. Außerdem geht die Erfindung von einer Verwendung einer Folie oder Schicht für ein Eindeckungsteil aus. US2011/0016779 A1 beschreibt Eindeckungsteile für Gewächshäusern, wobei die Eindeckungsteile in der Lage sind, die spektrale Verteilung des ein- und ausgehenden Lichts zu verändern.

Aus dem Stand der Technik sind Instore-Treibhäuser bekannt, bei denen es sich um vergleichsweise kleine Horticulture-Gewächshäuser (Gartenbau-Gewächshäuser) handelt, die beispielsweise in großen Einzelhandelsgeschäften, wie Supermärkten, aufgestellt werden können. Eine Beleuchtung in Supermärkten weist üblicherweise einen Weißton nahe der oder auf der Planck-Kurve auf. Für in den Instore-Treibhäusern vorgesehene Pflanzen liegt allerdings ein optimales Lichtspektrum einer Beleuchtung weit von der Planck-Kurve entfernt und hat häufig einen bläulich-violetten Charakter. Dieser für die Pflanzen optimale Farbton würde allerdings in Supermärkten beispielsweise von den Kunden üblicherweise als störend empfunden werden.

Die Aufgabe der vorliegenden Erfindung ist es, das aufgezeigte Problem zu lösen.

Diese Aufgabe wird gelöst durch ein Eindeckungsteil für ein Gewächshaus gemäß den Merkmalen des Anspruchs 1, durch ein Gewächshaus gemäß den Merkmalen des Anspruchs 12 und durch eine Verwendung einer Folie oder Schicht für ein Eindeckungsteil gemäß den Merkmalen des Anspruchs 14.

Besonders vorteilhafte Ausgestaltungen finden sich in den abhängigen Ansprüchen.

Erfindungsgemäß ist ein Eindeckungsteil für ein Gewächshaus, insbesondere um ein innerhalb eines Raumes angeordneten Gewächshauses, vorgesehen (bspw. Instore-Gewächshaus oder Laden-Gewächshaus), wobei das Eindeckungsteil lichtdurchlässig ist und eine Innen- und Außenseite aufweist. Mit Vorteil ist das Eindeckungsteil derart ausgestaltet, dass Strahlung mit hohem Rot- und/oder Blauanteil, die von der Innenseite her durch das Eindeckungsteil strahlt nach außen strahlt, beeinflussbar und/oder modifizierbar ist, sodass die nach außen tretende Gesamtstrahlung einen Weiß-Farbton auf der Planck-Kurve aufweist.

Diese Lösung hat den Vorteil, dass durch das Eindeckungsteil elektromagnetische Strahlung einer Innenbeleuchtung oder Horticulture-Beleuchtung des Instore-Gewächshauses, die nach außen strahlt, modifizierbar oder beeinflussbar ist. Hierdurch kann, beispielsweise für einen Kunden eines Supermarkts, in dem das Instore-Gewächshaus aufgestellt ist, eine nach außen tretenden Strahlung erzeugt werden, die als nicht störend empfunden wird.

Somit ist auf vorrichtungstechnisch einfache Weise mit einem aktiven Eindeckungsteil eine elektromagnetische Strahlung beeinflussbar, um eine aus dem Instore-Gewächshaus nach außen tretende Strahlung mit zum Beispiel einem bläulich-violetten Charakter zu vermeiden.

Bei dem Innenraum-Gewächshaus kann es sich um ein Inhome-Gewächshaus (beispielsweise ein Gewürzschrank für Zuhause), um ein Instore-Gewächshaus (beispielsweise im Supermarkt), um ein Inrestaurant-Gewächshaus (im Restaurant), um ein Inhotel-Gewächshaus (im Hotel), um ein Incompany-Gewächshaus (im Unternehmen), um ein Inpublic-Gewächshaus (in Krankenhäusern, U-Bahn-Stationen, Schulen, Universitäten, Museen, sonstigen öffentlichen Räumen) handeln. Bei dem Gewächshaus kann es sich beispielsweise auch um ein Stadtgewächshaus oder ein Dach-Gewächshaus handeln, die in der Nacht beleuchtet werden und womit ggf. "Lichtverschmutzung" für die Anwohner stattfindet.

Bevorzugterweise ist das Eindeckungsteil derart ausgestaltet, dass es zur Beeinflussung der Strahlung die Lichtfarbe der Strahlung und/oder die Polarisation der Strahlung modifizieren kann.

Vorzugsweise ist das Eindeckungsteil zur Beeinflussung der Strahlung als Filter ausgebildet, der bestimmte Wellenlängen der Strahlung, insbesondere blau-violette Wellenlängen, ausfiltert.

Alternativ oder zusätzlich kann vorgesehen sein, dass über das Eindeckungsteil zur Beeinflussung der Strahlung eine Zusatzstrahlung hinzugefügt ist. Hierdurch werden somit Wellenlängen zur aus dem Instore-Gewächshaus austretenden Strahlung hinzugefügt.

Alternativ oder zusätzlich ist denkbar, dass das Eindeckungsteil zur Beeinflussung der Strahlung als Konverter ausgebildet ist. Das Eindeckungsteil kann die austretende Strahlung dann zumindest hinsichtlich eines Teils ihrer Wellenlängen konvertieren.

Alternativ oder zusätzlich kann vorgesehen sein, dass das Eindeckungsteil zur Beeinflussung der Strahlung als Polarisator wirkt. Somit können zumindest Teile der Strahlung, die aus dem Instore-Gewächshaus austreten, über alle Wellenlängen hinweg unter Ausnutzung der Polarisation herausgefiltert werden. Vorzugsweise strahlt hierbei die Innenleuchte polarisiertes Licht ab. Diese Ausführungsform ist außerdem vorteilhaft, da ein Polarisator äußerst kostengünstig ist. Des Weiteren wirkt der Polarisator mit Vorteil unabhängig von Wellenlängen der Strahlung. Handelt es sich dann beispielsweise bei der Strahlung um eine dynamische Strahlung, die sich zeitlich hinsichtlich ihres Spektrums ändert, so hat dies keinen Einfluss auf die Polarisationswirkung des Polarisators. Der Polarisator kann somit einfach für verschiedenste Strahlungen eingesetzt werden.

Das Eindeckungsteil ist mit Vorteil aus einer lichtdurchlässige Scheibe, insbesondere als Glasscheibe oder Kunststoffscheibe, ausgebildet. Alternativ ist denkbar, dass das Eindeckungsteil als Treibhausfolie ausgebildet ist. Auf die Scheibe oder Treibhausfolie kann dann auf vorrichtungstechnisch einfache Weise eine Schicht oder alternativ eine Folie zur Beeinflussung der Strahlung aufgebracht sein. Somit ist denkbar, dass durch die Scheibe oder Treibhausfolie an sich die austretende Strahlung nicht beeinflusst wird, sondern erst durch die aufgebrachte Schicht oder Folie. Alternativ oder zusätzlich kann vorgesehen sein, dass die Scheibe oder Treibhausfolie einen Konversionsstoff oder einen Leuchtstoff oder ein Leuchtstoffgemisch aufweist, um - wie vorstehend bereits erläutert - als Konverter zu wirken. Durch die aufgebrachte Schicht oder Folie auf das Eindeckungsteil kann somit auf einfache Weise das Eindeckungsteil die Strahlung beeinflussen oder modifizieren.

Damit das Eindeckungsteil als Filter wirken kann, ist vorteilhafterweise die aufgebrachte Schicht oder Folie als Farbfilter ausgebildet. Dieser ist vorzugsweise als dichroitischer Filter oder Interferenzfilter ausgebildet. Somit kann die Schicht oder Folie bestimmte Wellenlängen der aus dem Instore-Gewächshaus austretenden Strahlung abschwächen oder herausfiltern. Vorzugsweise filtert der Farbfilter blau-violette Strahlung heraus. Durch den Filter werden somit verbleibende Wellenlängen der austretenden Strahlung als Weißlicht oder zumindest als weniger blaustichig wahrgenommen.

Mit der aufgebrachten Schicht oder Folie kann alternativ oder zusätzlich die Zusatzstrahlung hinzugefügt werden, indem über die Schicht oder die Folie zumindest über die Außenseite des Eindeckungsteils die Zusatzstrahlung emittierbar ist. Somit können bestimmte Wellenlängen zur aus dem Instore-Gewächshaus austretenden Strahlung hinzugefügt werden. Somit wird auf das als Treibhausfolie oder Scheibe ausgebildete Eindeckungsteil eine Schicht oder Folie aufgebracht, die bestimmte Wellenlängen nach außen abstrahlt, welche sich dann mit der nach außen dringenden Strahlung der blau-violetten Innenleuchte des Instore-Gewächshauses zu einer weißeren Strahlung vermischt. Vorzugsweise handelt es sich bei der Schicht oder Folie vorrichtungstechnisch einfach um eine lichtdurchlässige oder transparente organische Leuchtdiode, wie beispielsweise eine Organic Light Emitting Diode (OLED). Beispielsweise wird von der Leuchtdiode gelbe Strahlung emittiert, die dann zusammen mit der Strahlung der Innenleuchte des Instore-Gewächshauses weißliche Strahlung ergibt. Ändert sich die aus dem Instore-Gewächshaus austretende Strahlung dynamisch, beispielsweise hinsichtlich ihres Spektrums, so ist denkbar, dass die Zusatzstrahlung daran angepasst wird.

Die auf die Scheibe oder Treibhausfolie aufgebrachte Schicht oder Folie kann alternativ oder zusätzlich auch als Konverter ausgebildet sein. Somit wird auf die Scheibe oder Treibhausfolie eine Folie oder Schicht aufgebracht, die bestimmte Wellenlängen zumindest teilweise in andere Wellenlängen konvertiert, so dass die resultierende aus dem Eindeckungsteil austretende Strahlung als Weißlicht wahrgenommen werden kann. Die Schicht oder Folie kann somit bestimmte Wellenlängen der Innenleuchte des Instore-Gewächshauses in andere Wellenlängen umwandeln.

Zur Konversion weist die Scheibe oder Treibhausfolie und/oder die auf die Scheibe aufgebrachte Schicht und/oder die auf die Scheibe aufgebrachte Folie zur Konversion einen Leuchtstoff oder ein Leuchtstoffgemisch, zum Beispiel ein Cer-YAG-Leuchtstoffgemisch und/oder Nanomaterialien (z.B. Nanodots, Nanokristalle) auf. Ist als Konverter eine Schicht oder Folie vorgesehen, so kann diese, insbesondere als Leuchtstoffbeschichtung, derart ausgestaltet sein, dass lediglich eine Teilkonversion der Strahlung, beispielsweise von Blau in Gelb erfolgt. Nicht konvertierte Strahlung und konvertierte Strahlung bilden dann vorteilhafterweise die als Weißlicht wahrgenommene austretende Strahlung. Beispielsweise ist die Schicht oder Folie nur wenige Mikrometer dick oder sogar noch dünner.

Die als Konverter wirkende Schicht oder Folie (Leuchtstoffbeschichtung) wird vorzugsweise innen- und/oder außenseitig auf die Scheibe des Eindeckungsteils aufgebracht, beispielsweise vorrichtungstechnisch einfach mittels Sprühen. Somit kann es sich bei der Schicht um eine Sprühbeschichtung handeln. Denkbar ist auch, eine leuchtstoffhaltige Folie einzusetzen. Alternativ oder zusätzlich kann auch die beispielsweise aus Glas bestehende Scheibe im Herstellungsprozess mit den Leuchtstoff- oder Nanodots versehen werden, indem beispielsweise in einem Glas-Sinter-Prozess diese eingebettet werden.

Alternativ oder zusätzlich ist denkbar, dass die Schicht oder Folie, die auf die Scheibe oder auf die Treibhausfolie aufgebracht ist, als Polarisator ausgebildet ist. Somit wird auf die Scheibe oder auf die Treibhausfolie des Eindeckungsteils die Folie oder Schicht aufgebracht, die nur Licht einer bestimmten Polarisation durchlässt. In weiterer Ausgestaltung der Erfindung ist denkbar, dass die als Polarisator wirkende Schicht oder Folie eine einheitliche Polarisation aufweist oder Bereiche mit unterschiedlicher Polarisation hat. Weiter ist vorteilhaft, dass bei einer derartigen Schicht oder Folie das Instore-Gewächshaus nicht dunkel erscheint, da es aufgrund der lichtdurchlässigen oder durchsichtigen Scheiben des Eindeckungsteils durch die Beleuchtung des Supermarkts mit beleuchtet wird. Dieses Licht ist hierbei unpolarisiert und wird von der als Polarisator wirkenden Schicht oder Folie (Polarisationsfilter) üblicherweise nur zu einem kleinen Teil, falls die Polarisation zufällig übereinstimmt, herausgefiltert, und zwar sowohl beim Durchgang von außen nach innen, als auch bei einer Reflexion von innen nach außen. Um ein schwach polarisiertes Licht der Innenleuchte des Instore-Gewächshauses zu polarisieren, können verschiedene Polarisationsmethoden eingesetzt werden, wie beispielsweise lineare oder zirkulare Polarisation. Die als Polarisator ausgebildete Schicht oder Folie kann als H-Filter oder aus einer Kombination aus H-Filtern und A/4-Schichten, oder aus Schichten aus chiralen Molekülen, wie beispielsweise Wire-Grid-Polarisatoren, und/oder durch Reflexion mit einem Brewster-Winkel ausgebildet sein.

Erfindungsgemäß ist ein Gewächshaus oder ein Instore-Gewächshaus mit zumindest einem Eindeckungsteil oder mehreren Eindeckungsteilen gemäß einem oder mehrerer der vorhergehenden Aspekte vorgesehen. In dem Instore-Gewächshaus ist zumindest eine Innenleuchte angeordnet, die im allgemeinen unpolarisiertes Licht abstrahlt. Bei dem erfindungsgemäßen Instore-Gewächshaus kann somit auf vorrichtungstechnisch einfache Weise im Wesentlichen nicht störendes Weißlicht nach außen strahlen.

Mit Vorteil emittiert die Innenleuchte teilweise polarisiertes Licht oder im Wesentlichen vollständig oder vollständig polarisiertes Licht. Dies hat den Vorteil, dass bei dem als Polarisator ausgebildeten Eindeckungsteil zumindest ein Teil der Strahlung geblockt werden kann. Vorzugsweise strahlt die Innenleuchte hierbei polarisierte Strahlung ab, die vorzugsweise orthogonal zur Polarisationsrichtung des als Polarisator wirkenden Eindeckungsteils emittiert wird. Beim Durchgang der Strahlung durch das als Polarisator ausgebildete Eindeckungsteil wird somit diejenige Strahlung herausgefiltert, die orthogonal zur Polarisationsorientierung des Eindeckungsteils ausgerichtet ist. Selbst wenn hierdurch nicht die vollständige Strahlung erfasst wird, kann dennoch ein signifikanter Teil der emittierten Strahlung geblockt werden.

Des Weiteren ist bei einer Innenleuchte, die polarisiertes Licht emittiert, vorteilhaft, dass hierdurch ein Pflanzenwachstum positiv beeinflusst werden kann.

Eine Strahlungsquelle der Innenleuchte kann vorzugsweise die Laser Activated Remote Phosphor Technologie (LARP-Technologie) einsetzen, womit es sich dann um eine transmissive LARP-Lichtquelle handeln kann. Bei der LARP-Technologie wird ein von der Strahlungsquelle beabstandet angeordnetes Konversionselement, das einen Leuchtstoff aufweist oder daraus besteht, mit einer Anregungsstrahlung, insbesondere einem Anregungsstrahl (Pumpstrahl, Pumplaserstrahl) bestrahlt, insbesondere mit dem Anregungsstrahl einer Laserdiode. Die Anregungsstrahlung des Anregungsstrahls wird vom Leuchtstoff absorbiert und zumindest teilweise in eine Konversionsstrahlung (Emissionsstrahlung) umgewandelt, deren Wellenlängen und somit spektralen Eigenschaften und/oder Farbe durch die Konversionseigenschaften des Leuchtstoffs bestimmt wird. Beispielsweise kann so mit Hilfe des Konversionselements blaue Anregungsstrahlung (blaues Laserlicht) in rote oder grüne oder gelbe Konversionsstrahlung (Konversionslicht, Beleuchtungslicht) konvertiert werden.

Wird als Anregungsstrahlung beispielsweise blaues Laserlicht verwendet, so ist die nicht konvertierte blaue Reststrahlung vorteilhafterweise polarisiert und kann vom Polarisator herausgefiltert werden.

Bei einer erfindungsgemäßen Verwendung wird eine Folie oder einer Schicht für ein Eindeckungsteil eines Gewächshauses oder Indoor-Gewächshauses eingesetzt. Die Folie oder Schicht kann hierbei als Farbfilter ausgestaltet sein, und/oder es ist mit der Folie oder mit der Schicht Zusatzstrahlung emittierbar, und/oder die Folie oder die Schicht kann als eine lichtdurchlässig organische Leuchtdiode ausgebildet sein, und/oder die Folie oder die Schicht kann als Konverter ausgebildet sein, und/oder die Folie oder die Schicht kann als Polarisator ausgebildet sein. Mit der Folie oder Schicht ist somit auf einfach Weise ein Eindeckungsteil eines Instore-Gewächshauses nachrüstbar um die austretende Strahlung zu modifizieren oder zu beeinflussen.

Im Folgenden soll die Erfindung anhand von Ausführungsbeispielen näher erläutert werden. Die Figuren zeigen:
- Fig. 1a und Fig. 2 bis 4: jeweils in einer schematischen Darstellung ein Instore-Gewächshaus jeweils gemäß einem Ausführungsbeispiel,
- Fig. 1b: in einer Kurvendarstellung Lichtspektren und das Transmissionsspektrum eines Farbfilters und
- Fig. 1c: ein CIE Normfarbensystem.

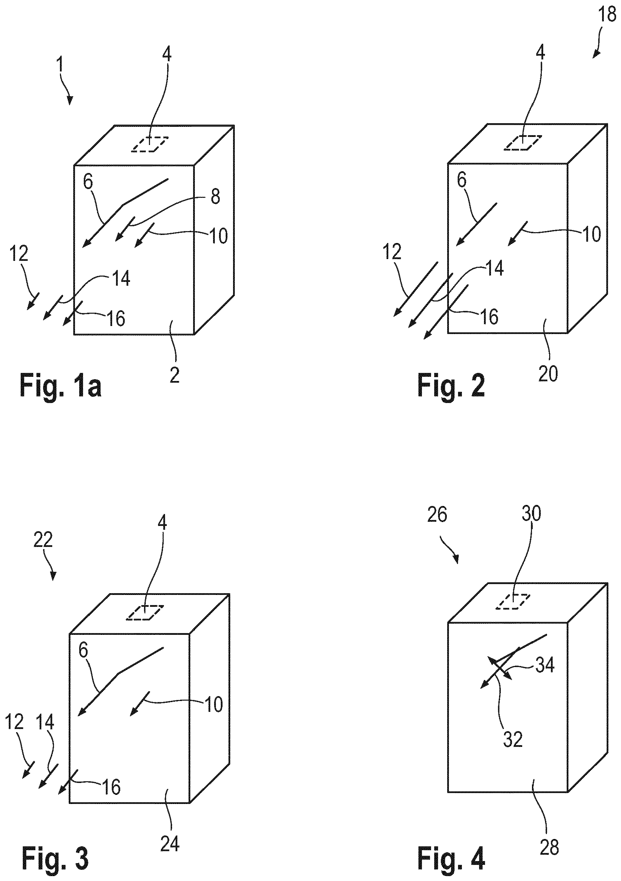

Gemäß Figur 1a ist schematisch ein Instore-Gewächshaus 1 dargestellt, das mehrere Eindeckungsteile 2 als Außenwandung aufweist. Die lichtdurchlässigen Eindeckungsteile 2 sind als Scheiben ausgestaltet. Innerhalb des Instore-Gewächshauses 1 sind Pflanzen anordbar, die über eine Innenleuchte 4 mit einer blau-violetten Strahlung bestrahlbar sind. Die Strahlung, die innerhalb des Instore-Gewächshauses 1 von der Innenleuchte 4 emittiert wird, ist in Figur 1a schematisch dargestellt. Die Strahlung weist hierbei einen Blauanteil 6, einen Gelbanteil 8 und einen Rotanteil 10 auf. Der Blauanteil 6 ist hierbei größer als die Gelb- und Rotanteile 8, 10, was durch einen verlängerten Pfeil dargestellt ist. Damit die aus dem Instore-Gewächshaus 1 austretende Strahlung als Weißlicht wahrgenommen wird, sind die Scheiben der Eindeckungsteile 2 mit einer Schicht versehen, die bestimmte Wellenlängen herausfiltert oder abschwächt. Die Eindeckungsteile 2 wirken somit als Filter. Gemäß Figur 1a werden hierbei insbesondere Wellenlängen im Blaubereich herausgefiltert. Die aus dem Instore-Gewächshaus 1 ausgetretene Strahlung hat gemäß Figur 1a einen Blauanteil 12, einen Gelbanteil 14 und einen Rotanteil 16. Es ist ersichtlich, dass durch die als Filter wirkenden Eindeckungsteile 2 der Blauanteil 12 der ausgetretenen Strahlung im Vergleich zum Blauanteil 6 der von der Innenleuchte 4 emittierten Strahlung verringert ist.

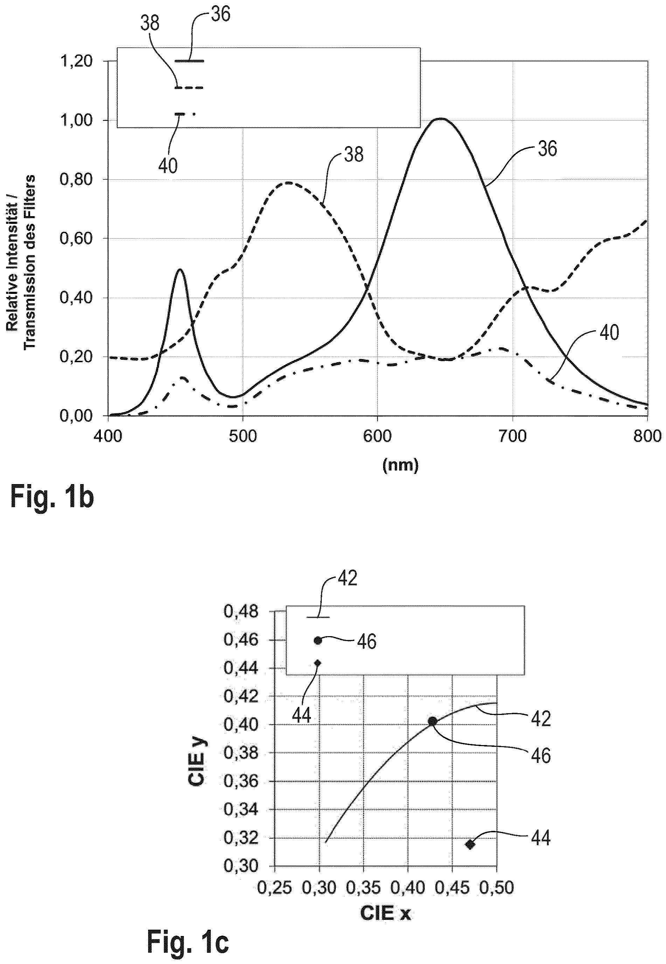

Gemäß Figur 1b sind Lichtspektren und das Transmissionsspektrum eines Farbfilters oder eines Eindeckungsteils zu sehen. Auf der Abszisse ist die Wellenlänge in Nanometer angegeben, auf der Ordinate die relative Intensität der Lichtquellen bezogen auf das Maximum bzw. die relative Transmission des Filters. Die Leuchte oder Innenleuchte für ein Instore-Gewächshaus hat in diesem Fall ein Spektrum 36 mit einem hohen Rot- und Blauanteil. Zudem ist das Transmissionsspektrum 38 eines Grünfilters zu sehen, welcher bevorzugt Wellenlängen im blauen Bereich (um 450nm) und im roten Bereich (um 650nm) herausfiltert, hingegen die grüne Farbe der Leuchte (um 550nm) mit etwa 80% durchlässt. Der Filter besteht teilweise oder vollständig aus Polyvinylchlorid und hat insbesondere eine Dicke von 100 µm. Außerdem ist das gefilterte Spektrum 40 angegeben, wie es ein Beobachter außerhalb des Instore-Gewächshauses wahrnimmt. Dieses Spektrum 40 weist keine ausgeprägten Peaks bei bestimmten Wellenlängen mehr auf, es wird von einem Beobachter als weiß wahrgenommen.

Gemäß Figur 1c ist zu erkennen, wie sich durch den Einsatz des Filters oder des Eindeckungsteils die Farbkoordinate im CIE Normfarbensystem ändert. Die durchgezogene Linie gibt die Plancksche Kurve 42 an, deren Farben als Weißtöne wahrgenommen werden. Ein Farbort 44 einer Leuchte für das Instore-Gewächshaus zeigt ursprünglich eine Farbe, die deutlich unterhalb der Planck-Kurve liegt. Sie weist eine eher violette Färbung auf. Durch den Einsatz des Filters ergibt sich eine neuer Farbort 46, der nun fast perfekt auf der Planck-Kurve liegt und deshalb von Beobachtern außerhalb des Instore-Gewächshauses als weiß wahrgenommen wird. In diesem Fall wurden Koordinaten von CIEx=0,428 und CIEy=0,403 erreicht. Die korrelierte Farbtemperatur des gefilterten Spektrums liegt bei 3150 Kelvin.

Neben dem Effekt, dass Beobachter das Licht als weiß wahrnehmen, wirken die in dem Instore-Gewächshaus kultivierten Pflanzen durch den Filter oder das Eindeckungsteil authentisch in ihrer Farbe.

Gemäß Figur 2 ist ein Instore-Gewächshaus 18 vorgesehen mit Eindeckungsteilen 20, auf deren Scheiben eine Schicht aufgebracht ist, die jeweils zusätzlich eine Strahlung (Zusatzstrahlung) emittiert. Bei der Schicht handelt es sich beispielsweise um eine organische Leuchtdiode. Gemäß Figur 2 hat die von der Innenleuchte 4 emittierte Strahlung den Blauanteil 6 und den Rotanteil 10, wobei der Blauanteil deutlich größer ist. Durch die Eindeckungsteile 20 wird nun Strahlung hinzugemischt, wodurch die nach außen tretende Strahlung anstelle eines blau-violetten Charakters einen weißlichen Charakter aufweist. Gemäß Figur 2 sind die Anteile 12, 14 und 16 bei der nach außen tretenden Mischstrahlung im Wesentlichen gleich. Durch die Zusatzstrahlung kann des Weiteren die Lichtintensität der nach außen tretenden Strahlung im Vergleich zur von der Innenleuchte 4 emittierten Strahlung erhöht sein. Außerdem kann beispielsweise ein Teil der blauen Strahlung, die von der Innenleuchte 4 emittiert ist, durch das Eindeckungsteil 20 absorbiert sein.

In Figur 3 hat ein Instore-Gewächshaus 22 Eindeckungsteile 24, auf deren Scheibe jeweils eine Schicht aufgebracht ist, die als Konverter wirkt. Die wenige Mikrometer betragende Schicht kann hierbei Leuchtstoffe als Gelb-Leuchtstoff aufweisen, wie beispielsweise Cer:Yag. Aus diesem Grund kann beispielsweise zumindest teilweise der Blauanteil 6 der von der Innenleuchte 4 emittierten Strahlung in einen Gelbanteil 14 konvertiert werden. Somit kann die von der Innenleuchte 4 emittierte Strahlung beispielsweise einen vergleichsweise großen Blauanteil 6 und den Rotanteil 10 aufweisen und die nach außen austretende Strahlung kann dann die Anteile 12 bis 16. Hierdurch ist ermöglicht, dass ein starker Blauanteil 6 durch den Gelb-Leuchtstoff teilweise in den Gelbanteil 14 umgewandelt werden kann, damit, zusammen mit dem unkonvertierten restlichen Blauanteil 12, eine weißlichere Strahlung entsteht.

Gemäß Figur 4 hat ein Instore-Gewächshaus 26 Eindeckungsteile 28, die als Polarisator wirken. Auf die Scheiben der Eindeckungsteile 28 ist hierbei eine Schicht aufgebracht, die nur Strahlung einer bestimmten Polarisation durchlässt. Eine Innenleuchte 30 emittiert hierbei polarisierte Strahlung 32, wobei zumindest ein Teil der Strahlung 32 orthogonal zur Polarisationsrichtung 34 der Eindeckungsteile 28 emittiert ist. Bei der Durchstrahlung durch das Eindeckungsteil 2 wird somit diejenige Strahlung herausgefiltert, die orthogonal zur Polarisationsrichtung 34 emittiert ist.

Offenbart ist ein Eindeckungsteil für ein Instore-Gewächshaus, mit dem aus dem Instore-Gewächshaus austretende Strahlung beeinflussbar oder modifizierbar ist.

**BEZUGSZEICHENLISTE**

| | |
|---|---|
| Instore-Gewächshaus | 1 |
| Eindeckungsteil | 2 |
| Innenleuchte | 4 |
| Blauanteil | 6 |
| Gelbanteil | 8 |
| Rotanteil | 10 |
| Blauanteil | 12 |
| Gelbanteil | 14 |
| Rotanteil | 16 |
| Instore-Gewächshaus | 18 |
| Eindeckungsteil | 20 |
| Instore-Gewächshaus | 22 |
| Eindeckungsteil | 24 |
| Instore-Gewächshaus | 26 |
| Eindeckungsteil | 28 |
| Innenleuchte | 30 |
| Strahlung | 32 |
| Polarisationsstrahlung | 34 |
| Spektrum | 36, 40 |
| Transmissionsspektrum | 38 |
| Plancksche Kurve | 42 |
| Farbort Leuchte | 44 |
| Farbort des gefilterten Lichts | 46 |

## Patentansprüche

1. Eindeckungsteil für ein Gewächshaus (1, 18, 22, 26), wobei das Eindeckungsteil (2, 20, 24, 28) lichtdurchlässig ist und eine Innen- und eine Außenseite aufweist, **dadurch gekennzeichnet, dass** das Eindeckungsteil (2, 20, 24, 28) derart ausgestaltet ist, dass Strahlung mit hohem Rot- und/oder Blauanteil, die von der Innenseite her durch das Eindeckungsteil (2, 20, 24, 28) nach außen strahlt, beeinflusst ist, sodass die nach außen tretende Gesamtstrahlung einen Weiß-Farbton auf der Planck-Kurve aufweist.

2. Eindeckungsteil nach Anspruch 1, wobei das Eindeckungsteil (2) zur Beeinflussung der Strahlung als Filter für bestimmte Wellenlängen der Strahlung (6, 8, 10) ausgebildet ist, und/oder wobei über das Eindeckungsteil (20) zur Beeinflussung der Strahlung (6, 10) eine Zusatzstrahlung hinzugefügt ist, die sich mit der Strahlung (6, 10) vermischt, und/oder wobei das Eindeckungsteil (24) zur Beeinflussung der Strahlung (6, 10) als Konverter ausgebildet ist, der die Strahlung (6, 10) hinsichtlich zumindest eines Teils ihrer Wellenlängen konvertiert, und/oder wobei das Eindeckungsteil (28) zur Beeinflussung der Strahlung als Polarisator ausgebildet ist.

3. Eindeckungsteil nach Anspruch 1 oder 2, wobei dieses als eine lichtdurchlässige Scheibe oder Treibhausfolie ausgebildet ist, auf die eine Schicht oder Folie zur Beeinflussung der Strahlung (6, 8, 10) aufgebracht ist.

4. Eindeckungsteil nach einem der Ansprüche 1 bis 3, wobei das Eindeckungsteil (24) als eine lichtdurchlässige Scheibe oder Treibhausfolie ausgebildet ist, die einen Konversionsstoff aufweist.

5. Eindeckungsteil nach Anspruch 3 oder 4, wobei die Schicht oder Folie als Farbfilter ausgebildet ist.

6. Eindeckungsteil nach einem der Ansprüche 3 bis 5, wobei mit der Schicht oder mit der Folie Zusatzstrahlung zumindest über die Außenseite des Eindeckungsteils (20) emittierbar ist.

7. Eindeckungsteil nach Anspruch 6, wobei die Schicht oder die Folie als eine lichtdurchlässig organische Leuchtdiode ausgebildet ist.

8. Eindeckungsteil nach einem der Ansprüche 3 bis 7, wobei die Schicht oder die Folie als Konverter ausgebildet ist.

9. Eindeckungsteil nach Anspruch 8, wobei die Schicht und/oder die Scheibe und/oder die Treibhausfolie zur Konversion einen Leuchtstoff oder ein Leuchtstoffgemisch und/oder Nanomaterialien aufweist.

10. Eindeckungsteil nach einem der Ansprüche 3 bis 9, wobei die Schicht als Polarisator ausgebildet ist.

11. Eindeckungsteil nach einem der vorherigen Ansprüche, wobei dieses derart ausgestaltet ist, dass die Strahlung, die von der Innenseite her durch das Eindeckungsteil (2, 20, 24, 28) nach außen strahlt, beeinflusst ist, sodass das Licht eine korrelierte Farbtemperatur von 3150 Kelvin aufweist.

12. Gewächshaus mit zumindest einem Eindeckungsteil (2, 20, 24, 28) gemäß einem der vorhergehenden Ansprüche, wobei in dem Gewächshaus (1, 18, 22, 26) zumindest eine Innenleuchte (4, 30) angeordnet ist.

13. Gewächshaus nach Anspruch 12, wobei die Innenleuchte (30) zumindest teilweise polarisierte Strahlung emittiert, und/oder wobei die Innenleuchte (30) Licht emittiert, das an Pflanzen, die in dem Gewächshaus (1, 18, 22, 26) anordbar sind, angepasst ist.

14. Verwendung einer Folie oder einer Schicht für ein Eindeckungsteil (2, 20, 24, 28) eines Gewächshauses (1, 18, 22, 26) nach Anspruch 12 oder 13, wobei die Folie oder Schicht als Farbfilter ausgestaltet ist, und/oder wobei mit der Folie oder mit der Schicht Zusatzstrahlung emittierbar ist, und/oder wobei die Folie oder die Schicht als Konverter ausgebildet ist, und/oder wobei die Schicht als Polarisator ausgebildet ist, wobei Strahlung mit hohem Rot- und/ oder Blauanteil, die von den Innenseite her durch das Eindeckungsteil nach außen strahlt, beeinflusst ist, sodass die nach außen tretende Gesamtstrahlung einen Weiß-Farbton auf der Planck-Kurve aufweist.

## Claims

1. Cover member for a greenhouse (1, 18, 22, 26), wherein the cover member (2, 20, 24, 28) is translucent and has an inner side and an outer side, **characterized in that** the cover member (2, 20, 24, 28) is configured such that radiation with a high red and/or blue ratio which radiates from the inner side outward through the cover member (2, 20, 24, 28) is influenced so that the total radiation exiting outside has a white hue on the Planck curve.

2. Cover member according to claim 1, wherein the cover member (2) is configured as a filter for specific wavelengths of the radiation (6, 8, 10) for influencing the radiation, and/or wherein an additional radiation which blends together with the radiation (6, 10) is added via the cover member (20) for influencing the radiation (6, 10), and/or wherein the cover member (24) is configured as a converter which converts the radiation (6, 10) with regard to at least a part of its wavelengths for influencing the radiation (6, 10), and/or wherein the cover member (28) is configured as a polarizer for influencing the radiation.

3. Cover member according to claim 1 or 2, wherein this is configured as a translucent pane or hothouse film, onto which a layer or film is applied for influencing the radiation (6, 8, 10).

4. Cover member according to one of claims 1 to 3, wherein the cover member (24) is configured as a translucent pane or hothouse film which comprises a conversion substance.

5. Cover member according to claim 3 or 4, wherein the layer or film is configured as a color filter.

6. Cover member according to one of claims 3 to 5, wherein additional radiation can be emitted with the layer or film at least via the outer side of the cover member (20).

7. Cover member according to claim 6, wherein the layer or the film is configured as a translucent, organic light-emitting diode.

8. Cover member according to any one of claims 3 to 7, wherein the layer or the film is configured as a converter.

9. Cover member according to claim 8, wherein the layer and/or the film and/or the hothouse film comprises for conversion a luminescent substance or a luminescent substance mixture and/or nanomaterials.

10. Cover member according to one of claims 3 to 9, wherein the layer is configured as a polarizer.

11. Cover member according to one of the preceding claims, wherein it is configured such that the radiation which radiates from the inner side outward through the cover member (2, 20, 24, 28) is influenced so that light has a correlated color temperature of 3150 Kelvin.

12. Greenhouse having at least one cover member (2, 20, 24, 28) according to one of the preceding claims, wherein at least one interior light (4, 30) is arranged in the greenhouse (1, 18, 22, 26).

13. Greenhouse according to claim 12, wherein the interior light (30) emits at least partially polarized radiation, and/or wherein the interior light (30) emits light which is adapted to plants that can be arranged in the greenhouse (1, 18, 22, 26).

14. Use of a film or a layer for a cover member (2, 20, 24, 28) of a greenhouse (1, 18, 22, 26) according to claim 12 or 13, wherein the film or layer is configured as a color filter, and/or wherein additional radiation can be emitted with the film or layer, and/or wherein the film or the layer is configured as a converter, and/or wherein the film or the layer is configured as a polarizer, wherein radiation with a high red and/or blue ratio, which radiates from the inner side outward through the cover member is influenced, so that the total radiation exiting outside has a white hue on the Planck curve.

## Revendications

1. Élément de couverture pour une serre (1, 18, 22, 26), dans lequel l'élément de couverture (2, 20, 24, 28) est perméable à la lumière et présente un côté intérieur et un côté extérieur, **caractérisé en ce que** l'élément de couverture (2, 20, 24, 28) est conçu de telle sorte qu'un rayonnement avec une composante rouge et/ou bleue élevée, qui rayonne vers l'extérieur depuis le côté intérieur à travers l'élément de couverture (2, 20, 24, 28), est influencé, de sorte que le rayonnement total parvenant à l'extérieur présente une teinte blanche sur la courbe de Planck.

2. Élément de couverture selon la revendication 1, dans lequel l'élément de couverture (2), pour influencer le rayonnement, est conçu comme un filtre pour des longueurs d'onde déterminées du rayonnement (6, 8, 10), et/ou dans lequel, pour influencer le rayonnement (6, 10), via l'élément de couverture (20) un rayonnement supplémentaire qui se mélange avec le rayonnement (6, 10) est ajouté, et/ou dans lequel l'élément de couverture (24), pour influencer le rayonnement (6, 10), est conçu comme un convertisseur qui convertit le rayonnement (6, 10) concernant au moins une partie de ses longueurs d'onde, et/ou dans lequel l'élément de couverture (28) est conçu comme un polariseur pour influencer le rayonnement.

3. Élément de couverture selon la revendication 1 ou 2, dans lequel celui-ci est conçu comme une plaque ou feuille de forcerie perméable à la lumière sur laquelle une couche ou feuille est appliquée pour influencer le rayonnement (6, 8, 10).

4. Élément de couverture selon l'une des revendications 1 à 3, dans lequel l'élément de couverture (24) est conçu comme une plaque ou feuille de forcerie perméable à la lumière qui présente une substance de conversion.

5. Élément de couverture selon la revendication 3 ou 4, dans lequel la couche ou feuille est conçue comme un filtre coloré.

6. Élément de couverture selon l'une des revendications 3 à 5, dans lequel un rayonnement supplémentaire peut être émis avec la couche ou avec la feuille au moins via le côté extérieur de l'élément de couverture (20).

7. Élément de couverture selon la revendication 6, dans lequel la couche ou la feuille est conçue comme une diode électroluminescente organique perméable à la lumière.

8. Élément de couverture selon l'une des revendications 3 à 7, dans lequel la couche ou la feuille est conçue comme un convertisseur.

9. Élément de couverture selon la revendication 8, dans lequel la couche et/ou la plaque et/ou la feuille de forcerie présente une substance luminescente ou un mélange de substances luminescentes et/ou des nanomatériaux pour la conversion.

10. Élément de couverture selon l'une des revendications 3 à 9, dans lequel la couche est conçue comme polariseur.

11. Élément de couverture selon l'une des revendications précédentes, dans lequel celui-ci est conçu de telle sorte que le rayonnement qui rayonne vers l'extérieur depuis le côté interne à travers l'élément de couverture (2, 20, 24, 28) est influencé, de sorte que la lumière présente une température de couleur corrélée de 3150 Kelvin.

12. Serre avec au moins un élément de couverture (2, 20, 24, 28) selon l'une des revendications précédentes, dans laquelle au moins un luminaire intérieur (4, 30) est disposé dans la serre (1, 18, 22, 26).

13. Serre selon la revendication 12, dans laquelle le luminaire intérieur (30) émet un rayonnement au moins partiellement polarisé, et/ou dans laquelle le luminaire intérieur (30) émet de la lumière qui est adaptée à des plantes qui peuvent être disposées dans la serre (1, 18, 22, 26).

14. Utilisation d'une feuille ou d'une couche pour un élément de couverture (2, 20, 24, 28) d'une serre (1, 18, 22, 26) selon la revendication 12 ou 13, dans laquelle la feuille ou couche est conçue comme un filtre coloré, et/ou dans laquelle un rayonnement supplémentaire peut être émis avec la feuille ou avec la couche, et/ou dans laquelle la feuille ou la couche est conçue comme un convertisseur, et/ou dans laquelle la couche est conçue comme un polariseur, dans laquelle un rayonnement avec une composante rouge et/ou bleue élevée, qui rayonne vers l'extérieur depuis le côté intérieur à travers l'élément de couverture, est influencé, de sorte que le rayonnement total qui parvient à l'extérieur présente une teinte blanche sur la courbe de Planck.
